# EUROPEAN PATENT SPECIFICATION

(11) **EP 3 587 804 B1**
(45) Date of publication and mention of the grant of the patent: **02.12.2020**
(21) Application number: 18202859.7
(22) Date of filing: 26.10.2018
(51) Int. Cl.: F03D 7/02, F03D 15/10, F03D 80/50

(54) **WIND TURBINE POWER GENERATION FACILITY AND MAINTENANCE METHOD THEREFORE**
WINDTURBINENSTROMERZEUGUNGSANLAGE UND WARTUNGSVERFAHREN DAFÜR
INSTALLATION DE GÉNÉRATION DE PUISSANCE DE TURBINE ÉOLIENNE ET SON PROCÉDÉ DE MAINTENANCE

(30) Priority: 26.06.2018 JP 2018120355
(43) Date of publication of application: 01.01.2020
(73) Proprietor: MITSUBISHI HEAVY INDUSTRIES, LTD., Minato-ku Tokyo 108-8215 (JP)
(72) Inventor: Takayanagi, Kazufumi, Tokyo, Tokyo 108-8215 (JP)
(74) Representative: Henkel & Partner mbB

(56) References cited:
- EP-A2- 1 788 238
- US-A1- 2014 041 474
- Robert P Tata ET AL: "Basic Gear Fundamentals Course No: M04-033 Credit: 4 PDH", , 31 December 2012 (2012-12-31), XP055584650, Retrieved from the Internet: URL:https://www.cedengineering.com/userfil es/Basic%20Gear%20Fundamentals.pdf [retrieved on 2019-04-30]
- Micromo: "Gearhead Construction and Use @BULLET Spur Gear Type Gearheads @BULLET Direction of Rotation @BULLET Planetary Gears Spur Gear Type Gearheads", , 31 December 2012 (2012-12-31), XP055584644, Retrieved from the Internet: URL:https://www.micromo.com/media/wysiwyg/ Technical-library/Gearheads/25_gearhead_co nstruction_use.pdf [retrieved on 2019-04-30]

## Description

### TECHNICAL FIELD

This disclosure relates to a wind turbine power generation facility and a maintenance method therefor.

### BACKGROUND

Various conventional configurations and methods for maintenance for wind turbine power generation facilities have been known.

WO 2012/029102 A1 discloses an example of a configuration of a wind turbine generator including: an electric pitch-control device that controls a pitch angle by driving a pinion gear that engages with a ring gear on the side of a wind turbine blade; and an engaging-region changing mechanism that changes a pitch-angle-control engaging region of the ring gear that engages with the pinion gear during pitch-angle control.

US 2014/041474 A1 discloses a yaw drive assembly for a wind turbine having a releasable and re-engageable coupling operably configured between a drive gear that engages with a yaw bearing and an output of a gear assembly that is coupled to a drive motor.

EP 1 788 238 A2 discloses the features of the preamble portion of claim 1 or claim 6.

### SUMMARY

Maintenance or part replacement conducted due to partial wearing or damage on a ring gear requires is desired to result in smallest possible loss due to operation stop. In this context, the configuration disclosed in WO 2012/029102 A1 requires the pinion gear on the side of the control device to be detached and repositioned for changing the engaging region between the ring gear and the pinion gear. This work is desired to involve a smaller load.

In view of the above, an object of at least one embodiment of the disclosure is to provide a simple configuration or method for achieving a longer fatigue life of a gear of a drive unit.

A maintenance method for a wind turbine power generation facility and a wind turbine power generation facility according to the invention include the features of claim 1 or claim 6, respectively.
(1) The maintenance method for a wind turbine power generation facility according to the invention is a maintenance method for a wind turbine power generation facility that is provided with a wind turbine rotor including at least one wind turbine blade, a nacelle that rotatably supports the wind turbine rotor, a tower that rotatably supports the nacelle, and an electric drive unit that changes a pitch angle of the wind turbine blade or a yaw angle of the nacelle,
   the method comprising a step of rotating a wheel gear engaged with a pinion gear of the drive unit by an integer number of times by driving the drive unit, the integer being equal to or larger than 1,
   wherein the number of teeth Nw of the wheel gear is set to be a value indivisible by the number of teeth Np of the pinion gear.
   Although the pitch angle or the yaw angle in the wind turbine power generation facility can be changed depending on wind conditions, repeatedly reciprocating drive may generally be performed within a movable range not reaching full rotation. In a wind turbine power generation facility with an electric drive unit changing the pitch angle or the yaw angle, a pinion gear of the drive unit and a wheel gear of a driven unit are engaged with each other with the same combination of area being always the same. As a result, the pitch angle or the yaw angle within a certain range involves a high engaging frequency in order to maintain a posture during operation or while the operation is stopped. A particular tooth repeatedly receiving a large load quickly wears to have a shorter fatigue life. Meanwhile, other teeth may receive a lower load to have a much longer fatigue life. Thus, replacement of the entire gear due to the low fatigue life of the particular tooth is not preferable because of a large work load required for the replacement and also in terms of cost.
   In view of this, the method according to (1) described above has the following feature. Specifically, maintenance is performed for the wind turbine power generation facility with the electric drive unit that changes a pitch angle of the wind turbine blade or a yaw angle of the nacelle driven, and the wheel gear engaged with the pinion gear of the drive unit rotated by an integer number of times equal to or larger than 1. Furthermore, the number of teeth Nw of the wheel gear is set to be a value indivisible by the number of teeth Np of the pinion gear. Thus, an engaging area of the wheel gear and the pinion gear can be shifted by the number of teeth that is equal to or larger than 1, compared with before rotation. Specifically, if the number of teeth of the wheel gear that engages with the pinion gear of the drive unit can be divided by the number of teeth of the pinion gear, the engaging area of the wheel gear and the pinion gear cannot be changed even if the wheel gear is rotated. With the method according to (1) described above, the engaging area can be changed with a simple method. Thus, a longer fatigue life of a gear of the drive unit can be achieved with a simple method without replacing the entire gear.
(2) In some embodiments, in the method according to (1) described above,
   the number of teeth Nw and the number of teeth Np may satisfy Nw = Np × M + Nd, where M and Nd are each an arbitrary integer, wherein Nd < Np.
   With the method according to (2) described above, the wheel gear that engages with the pinion gear of the drive unit is rotated by a number of times which is equal to or larger than 1, whereby the engaging area of the wheel gear and the pinion gear can be shifted by Nd which is an integer, compared with before rotation. Thus, a longer fatigue life of a gear of the drive unit can be achieved with a simple method with Nd being set to be an arbitrary integer, without replacing the entire gear.
(3) In some embodiments, in the method according to (2) described above,
   the integer Nd may satisfy 0.02 ≤ Nd/Nw ≤ 0.04.
   In the method according to (3) described above, the number of teeth Nd shifted by a single rotation corresponds to approximately 8° to 12° of the wheel gear. Thus, for example, by rotating the wheel gear for a single time, an engaging area of teeth that is particularly frequently used in the pitch angle control or the yaw angle control can be completely shifted from that before the rotation. Thus, all of frequently used teeth of the pinion gear can be shifted with a minimum number of rotations (a single rotation of the wheel gear), whereby the maintenance can be performed with a much shorter period of time.
(4) In some embodiments, in the method according to any one of (1) to (3) described above,
   the drive unit may include a pitch drive unit that changes the pitch angle,
   the wheel gear may be provided to a blade root portion of the wind turbine blade, and
   the step of rotating may include rotating the wheel gear engaged with the pinion gear of the pitch drive unit.
   With the method according to (4) described above, the advantage according to any one of (1) to (3) described above can be achieved for the engagement between the pinion gear of the pitch drive unit that changes the pitch angle of the wind turbine blade and the wheel gear that is provided to the blade root portion and engages with the pinion gear.
(5) In some embodiments, the method according to any one of (1) to (4) described above may further include a step of removing a cable extending from the drive unit toward opposite sides of the wheel gear.
   The wind turbine power generation facility may have wiring for various sensors, communication cables, and the like arranged on both sides of the wheel gear, between a driven unit and the drive unit that drives the driven unit.
   In view of this, in the method according to (5) described above, the cable extending toward the opposite sides of the wheel gear is removed. Thus, the wheel gear can be rotated during the maintenance for the wind turbine power generation facility, with the wiring for various sensors and the communication cable effectively prevented from being twisted, tangling, or broken.
(6) According to one alternative of the present invention a surface hardness of the pinion gear is set to be lower than a surface hardness of the wheel gear.
   Generally, the wheel gear that engages with the pinion gear is larger and heavier than the pinion gear, and thus requires more cumbersome replacing operations compared with the pinion gear.
   In view of this, the surface hardness of the pinion gear is set to be lower than the surface hardness of the wheel gear, so that the pinion gear wears faster than the wheel gear. Thus, in many cases, maintenance performed due to wearing of engaging teeth of the wheel gear and the pinion gear can be completed by replacing the pinion gear. Thus, a longer fatigue life of a gear of the drive unit can be achieved with a simple method.
(7) According to another alternative of the invention a surface roughness of the pinion gear is set to be higher than a surface roughness of the wheel gear.
   In the method according to (7) described above, the surface roughness of the pinion gear is set to be higher than the surface roughness of the wheel gear, so that the pinion gear wears faster than the wheel gear, as in (6) described above. Thus, in many cases, maintenance performed due to wearing of engaging teeth of the wheel gear and the pinion gear can be completed by replacing the pinion gear. Thus, a longer fatigue life of a gear of the drive unit can be achieved with a simple method.
(8) The wind turbine power generation facility according to the invention is a wind turbine power generation facility including inter alia:
   a wind turbine rotor including at least one wind turbine blade;
   a nacelle that rotatably supports the wind turbine rotor;
   a tower that rotatably supports the nacelle; and
   an electric drive unit that changes a pitch angle of the wind turbine blade or a yaw angle of the nacelle, wherein
   the drive unit includes:
      a motor;
      a reduction gear which transmits reduction gear of the motor; and
      a pinion gear attached to an output shaft of the reduction gear, and
   the number of teeth Nw of a wheel gear engaged with the pinion gear is set to be a value indivisible by the number of teeth Np of the pinion gear.

   In the configuration according to (8) described above, the number of teeth Nw of the wheel gear is set to be a value indivisible by the number of teeth Np of the pinion gear. Thus, for example, in the maintenance for the wind turbine power generation facility, the wheel gear engaged with the pinion gear of the drive unit is rotated by an integer number of times equal to or larger than 1, whereby an engaging area of the wheel gear and the pinion gear can be shifted by the number of teeth that is equal to or larger than 1 compared with before rotation. Specifically, if the number of teeth of the wheel gear that engages with the pinion gear of the drive unit can be divided by the number of teeth of the pinion gear, the engaging area of the wheel gear and the pinion gear cannot be changed. With the configuration according to (8) described above, the engaging area can be changed with a simple configuration. Thus, a longer fatigue life of a gear of the drive unit can be achieved with a simple method without replacing the entire gear.
(9) In some embodiments, in the configuration according to (8) described above,
   the number of teeth Nw and the number of teeth Np may satisfy Nw = Np × M + Nd, where M and Nd are each an arbitrary integer, wherein Nd < Np.
   With the configuration according to (9) described above, the wheel gear that engages with the pinion gear of the drive unit is rotated by a number of times which is equal to or larger than 1, whereby the engaging area of the wheel gear and the pinion gear can be shifted by Nd which is an integer, compared with before rotation, as in the case of (2) described above. Thus, a longer fatigue life of a gear of the drive unit can be achieved with a simple configuration with Nd being set to be an arbitrary integer, without replacing the entire gear.
(10) In some embodiments, in the configuration according to (8) or (9) described above,
   the drive unit may include a pitch drive unit that changes the pitch angle, and
   the wheel gear may be provided to a blade root portion of the wind turbine blade.
   With the configuration according to (10) described above, the advantage according to (8) or (9) described above can be achieved for the engagement between the pinion gear of the pitch drive unit that changes the pitch angle of the wind turbine blade and the wheel gear provided to the blade root portion.
(11) In some embodiments, in the configuration according to any one of (8) to (10),
   the pinion gear may be divided into at least two segments and is configured to be detachably attached to the output shaft in a direction perpendicular to an axial direction of the output shaft.
   With the configuration according to (11) described above, the pinion gear can be divided into at least two segments and can be detachably attached to the output shaft in a direction perpendicular to an axial direction of the output shaft. Thus, for example, the pinion gear to be replaced in the maintenance for the wind turbine power generation facility can be attached and detached in the direction orthogonal to the axial direction, so as not to be removed in the axial direction. Thus, an operation for replacing the pinion gear can be easily performed even when a clearance or a work space in the axial direction is small.
(12) In some embodiments, in the configuration according to any one of (8) to (11) described above,
   the pinion gear may be configured to be dividable along an axial direction at a portion where an engaging frequency between the pinion gear and the wheel gear is low.
   With the configuration according to (12) described above, the pinion gear can be divided along the axial direction at a portion where the engaging frequency between the pinion gear and the wheel gear is low. Thus, the wheel gear and the pinion gear can appropriately engage with each other with no dividing plane positioned in the portion where the engaging frequency between the wheel gear and the engaging frequency is high.
(13) In some embodiments, in the configuration according to any one of (8) to (12) described above,
   the pinion gear may be attached to the output shaft via a key and a key groove.

The configuration in (13) described above enables the pinion gear to be attached to the output shaft with a simple configuration, that is, via the key and the key groove. This enables the maintenance to be performed with much smaller work load for replacing the pinion gear, while ensuring torque transmission between the output shaft and the pinion gear.

With at least one embodiment of the disclosure, a longer fatigue life of a gear of a drive unit can be achieved with a simple configuration or method.

### BRIEF DESCRIPTION OF DRAWINGS

FIG. 1 is a schematic view illustrating an example of a configuration of a wind turbine power generation facility according to at least one embodiment of the disclosure;
FIG. 2 is a schematic view illustrating an example of a configuration of a drive unit according to some embodiments;
FIGS. 3A to 3C are tables illustrating engaging statuses of a pinion gear and wheel gear in a wind turbine power generation facility and a maintenance method therefor according to one embodiment, FIG. 3A illustrating an engaging status before the wheel gear is rotated, FIG. 3B illustrating an engaging status after the wheel gear is rotated once, and FIG. 3C illustrating an engaging status after the wheel gear is rotated twice;
FIG. 4 is a schematic view illustrating an example of a configuration of a drive unit according to another embodiment;
FIG. 5 is a diagram illustrating an example of a configuration of a pinion gear in a wind turbine power generation facility and a maintenance method therefor according to another embodiment; and
FIG. 6A is a flowchart illustrating a maintenance method for a wind turbine power generation facility according to one embodiment, and FIG. 6B is a flowchart illustrating a maintenance method for a wind turbine power generation facility according to another embodiment.

### DETAILED DESCRIPTION

Exemplary embodiments of the disclosure are described with reference to the accompanying drawings. The size, material, shape, other relative arrangements, and the like described in some embodiments below are not intended to limit the scope of the disclosure to these unless otherwise specified, and are merely illustrative. The scope of the protection is defined by the claims.

For example, expressions that represent relative or absolute arrangements such as "in a direction", "along a direction", "parallel", "perpendicular", "center", "concentric", or "coaxial" refer not only to what exactly these expressions represent but also to states that allow tolerance or are relatively displaced by such a degree of angle or distance that can achieve the same functions.

For example, expressions on shapes such as rectangular or cylindrical refer not only to shapes such as rectangular or cylindrical in a geometrically exact sense but also to such shapes that include protrusions, recesses, chamfered parts, or the like as long as the same functions are available.

Expressions that represent "comprising", "including", "being provided with", "with", or "having" one component are not exclusive expressions that would exclude the existence of other component(s).

First of all, a wind turbine power generation facility according to at least one embodiment of the disclosure will be described.

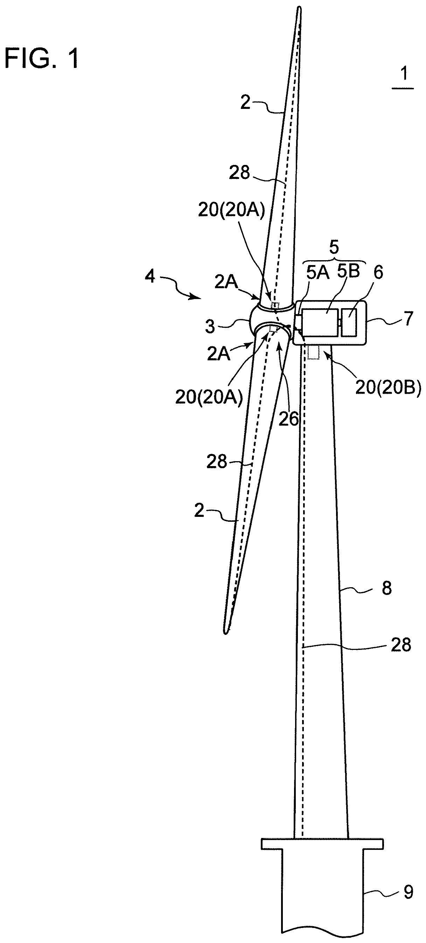

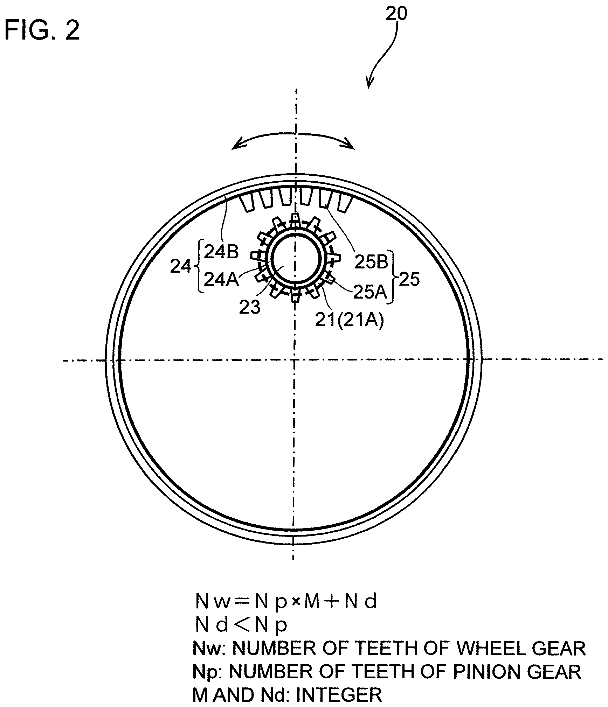

FIG. 1 is a schematic view illustrating an example of a configuration of a wind turbine power generation facility according to at least one embodiment of the disclosure. FIG. 2 is a schematic view illustrating an example of a configuration of a drive unit (a pitch drive unit or a yaw drive unit) according to some embodiments.

As in a nonlimiting example illustrated in FIGS. 1 and 2, a wind turbine power generation facility (hereinafter, referred to as a wind turbine 1) according to at least one embodiment of the disclosure includes a wind turbine rotor 4 including at least one wind turbine blade 2, a nacelle 7 that rotatably supports the wind turbine rotor 4, a tower 8 that rotatably supports the nacelle 7, and an electric drive unit 20 that changes a pitch angle of the wind turbine blade 2 or a yaw angle of the nacelle 7.

The wind turbine rotor 4 includes three wind turbine blades 2 and a hub 3 to which the wind turbine blades 2 are attached, and is rotatably supported by the nacelle 7 via a drive train 5 including a main shaft 5A, integrally coupled to the wind turbine rotor 4 in a rotatable manner, and a speed increaser 5B. Power is generated with rotational energy of the drive train 5 converted into electric energy by a generator 6.

The nacelle 7 is supported by the tower 8 to be yaw rotatable by the yaw drive unit 20B described later. The tower 8 stands on the base 9.

The drive unit 20 according to the disclosure includes a pitch drive unit 20A (electric pitch drive unit) that changes the pitch angle of the wind turbine blade 2 and an electric yaw drive unit 20B that changes the yaw angle of the nacelle 7. These drive unit each include: a motor 21 (a pitch motor 21A, a yaw motor 21B); a reduction gear 22 which transmits driving force of the motor 21; and a pinion gear 24A attached to an output shaft 23 of the reduction gear 22. The number of teeth Nw of a wheel gear 24B of a driven unit (the wind turbine blade 2 or the nacelle 7, for example) engaged with the pinion gear 24A is set to be a value indivisible by the number of teeth Np of the pinion gear.

The pinion gear 24A has an outer circumference entirely provided with teeth 25A that are separated from each other at an equal interval to be radially arranged.

The wheel gear 24B (also referred to as a ring gear) to have an inner circumference configured to engage with the pinion gear 24A. Specifically, the inner circumference is entirely provided with teeth 25B that are separated from each other at an equal interval (note that only a part of the teeth 25B is illustrated in FIG. 2 to simplify the illustration).

Although the pitch angle or the yaw angle in the wind turbine 1 can be changed depending on wind conditions, repeatedly reciprocating drive may generally be performed within a movable range not reaching full rotation. In the wind turbine 1 with the electric drive unit 20 changing the pitch angle or the yaw angle, the pinion gear 24A of the drive unit 20 and the wheel gear 24B of the driven unit are engaged with each other with the engaging area being always the same. As a result, the pitch angle or the yaw angle within a certain range involves a high engaging frequency in order to maintain a posture during operation or while the operation is stopped. A particular tooth 25 repeatedly receiving a large load quickly wears to have a shorter fatigue life. Meanwhile, other teeth 25 may receive a lower load to have a much longer fatigue life. Thus, replacement of the entire gear due to the low fatigue life of the particular tooth 25 is not preferable because of a large work load required for the replacement and also in terms of cost.

In view of this, the above-described configuration achieved by the present inventors through vigorous researches has the following feature. Specifically, the number of teeth Nw of the wheel gear 24B is set to be a value indivisible by the number of teeth Np of the pinion gear 24A. Thus, for example, in the maintenance for the wind turbine power generation facility, the wheel gear 24B that engages with the pinion gear 24A of the drive unit 20 is rotated by a number of times which is equal to or larger than 1, whereby an engaging area of the wheel gear 24B and the pinion gear 24A can be shifted by the number of teeth that is equal to or larger than 1 compared with before rotation. Specifically, if the number of teeth of the wheel gear 24B that engages with the pinion gear 24A of the drive unit 20 can be divided by the number of teeth of the pinion gear 24A, the engaging area of the wheel gear 24B and the pinion gear 24A cannot be changed even if the wheel gear 24B is rotated. With the configuration described above, the engaging area can be changed with a simple configuration. Thus, this simple configuration can achieve a longer fatigue life of the gear 24 of the drive unit 20 to reduce the need for replacing the entire gear 24.

In some embodiments, the number of teeth Nw and the number of teeth Np satisfy Nw = Np × M + Nd, where M and Nd are each an arbitrary integer, wherein Nd < Np. (see FIG. 2).

With this configuration, the wheel gear 24B that engages with the pinion gear 24A of the drive unit 20 is rotated by a number of times which is equal to or larger than 1, whereby the engaging area of the wheel gear 24B and the pinion gear 24A can be shifted by Nd which is an integer, compared with before rotation. Thus, this simple method can achieve a longer fatigue life of the gear 24 of the drive unit 20 to reduce the need for replacing the entire gear 24, with Nd set to be an arbitrary integer.

In the wind turbine power generation facility and the maintenance method therefor according to some embodiments, the drive unit 20 may include a pitch drive unit 20A that changes the pitch angle of the wind turbine blade 2, and the wheel gear 24B may be provided to a blade root portion 2A of the wind turbine blade 2.

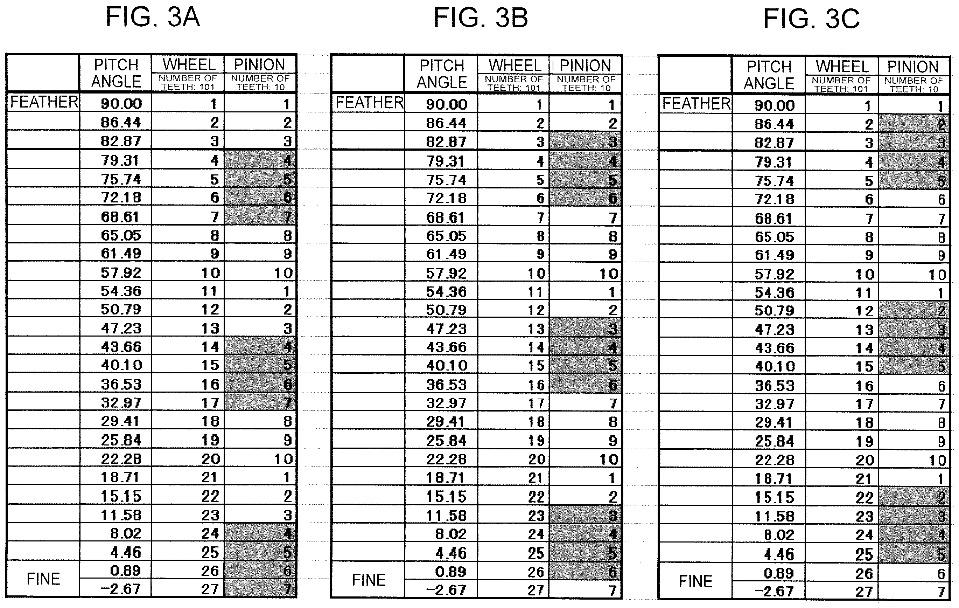

For example, FIGS. 3A to 3C is a table illustrating engaging statuses of a pinion gear and wheel gear in a wind turbine power generation facility and a maintenance method therefor according to one embodiment, FIG. 3A illustrating an engaging status before the wheel gear is rotated, FIG. 3B illustrating an engaging status after the wheel gear is rotated once, and FIG. 3C illustrating an engaging status after the wheel gear is rotated twice.

In the nonlimiting example illustrated in FIGS. 3A to 3C, the number of teeth Nw (= 101) of the wheel gear 24B is set to be indivisible by the number of teeth Np (= 10) of the pinion gear 24A. In this example, M = 10 and Nd = 1. Under this condition, when the wheel gear 24B rotates once (see FIG. 3B), the engaging area are shifted by one tooth from the status before the rotation (see FIG. 3A). Then, when the wheel gear 24B rotates further rotates once (twice in total), the engaging area are further shifted by one tooth (two teeth in total) (see FIG. 3C).

In this manner, the above described advantages of the disclosure can be achieved for the engagement between the pinion gear 24A of the pitch drive unit 20A that changes the pitch angle of the wind turbine blade 2 and the wheel gear 24B provided to the blade root portion 2A.

FIGS. 3A to 3C only illustrate teeth positioned within an angle between feather and fine states that are mainly and frequently used in the pitch control, to simplify the description.

As described above, the drive unit 20 may be the yaw drive unit 20B.

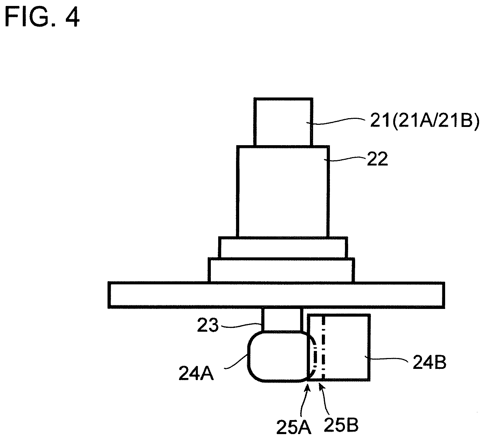

For example, a drive unit 20 (yaw drive unit 20B) according to another embodiment has the following exemplary configuration. Specifically, the yaw drive unit 20B includes a motor 21 (yaw motor 21B), a reduction gear 22 that transmits driving force from the motor 21, and a pinion gear 24A attached to an output shaft 23 of the reduction gear 22 (see FIG. 4). The number of teeth Nw of the wheel gear 24B of a driven unit (the nacelle 7 for example) that engages with the pinion gear 24A is set to be a value indivisible by the number of teeth Np of the pinion gear.

The pinion gear 24A has an outer circumference entirely provided with teeth 25A that are being separated from each other at an equal interval to be radially arranged.

The wheel gear 24B (also referred to as a ring gear) has an inner circumference configured to engage with the pinion gear 24A. Specifically, the inner circumference is entirely provided with teeth 25B separated from each other at an equal interval.

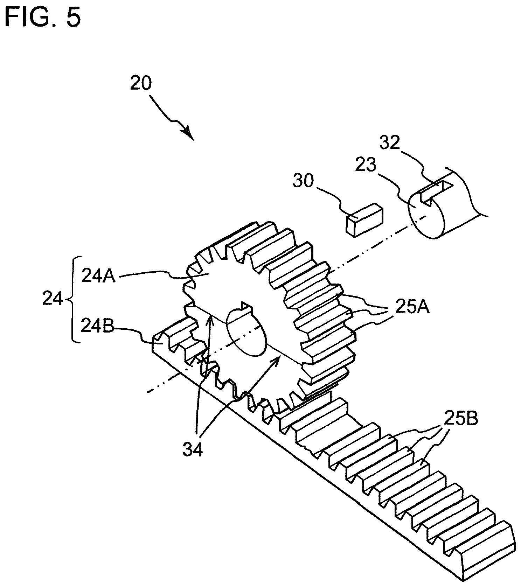

FIG. 5 is a diagram illustrating an example of a configuration of a pinion gear in a wind turbine power generation facility and a maintenance method therefor according to another embodiment.

As in a nonlimiting example illustrated in FIG. 5, in some embodiments, the pinion gear 24A may be divided into at least two segments and is configured to be detachably attached to the output shaft 23 in a direction perpendicular to an axial direction of the output shaft 23. With this configuration, the pinion gear 24A can be divided into at least two segments and can be detachably attached to the output shaft 23 in a direction perpendicular to the axial direction of the output shaft 23. Thus, for example, the pinion gear 24A to be replaced in the maintenance for the wind turbine 1 can be attached and detached in the direction orthogonal to the axial direction, so as not to be removed in the axial direction. Thus, an operation for replacing the pinion gear 24A can be easily performed even when a clearance or a work space in the axial direction is small.

In some embodiments, the pinion gear 24A is configured to be dividable along an axial direction at a portion where an engaging frequency between the pinion gear 24A and the wheel gear 24B is low (see, for example, FIG. 5).

For example, the portion where the engaging frequency is low may be a portion excluding the teeth 25 that mainly receives the load while the wind turbine 1 is operating, that is, a portion of the pinion gear 24A involving a relatively lower load than the other portions.

With this configuration, the pinion gear 24A can be divided along the axial direction at a portion where the engaging frequency between the pinion gear 24A and the wheel gear 24B is low, that is, at a portion where the load to the pinion gear 24A is low. Thus, the wheel gear 24B and the pinion gear 24A can appropriately engage with each other with a dividing plane 34 not positioned in the portion where the engaging frequency between the wheel gear 24B and the pinion gear 24A is high.

In some embodiments, the pinion gear 24A may be attached to the output shaft 23 via a key 30 and a key groove 32 (see, for example, FIG. 5). This configuration enables the pinion gear 24A to be attached to the output shaft 23 with a simple configuration, that is, via the key 30 and the key groove 32. This further enables the maintenance to be performed with much smaller work load for replacing the pinion gear 24A, while ensuring torque transmission between the output shaft 23 and the pinion gear 24A.

Next, a maintenance method for a wind turbine power generation facility according to at least one embodiment of the disclosure is described in detail with reference to the drawings.

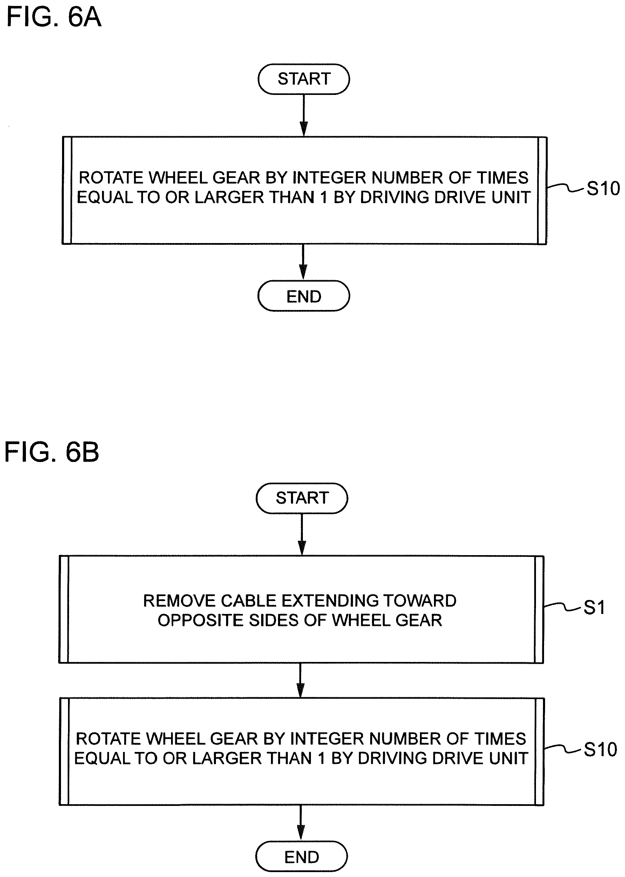

FIG. 6A is a flowchart illustrating a maintenance method for a wind turbine power generation facility according to one embodiment.

As in a nonlimiting example illustrated in FIG. 6A, a maintenance method for a wind turbine power generation facility according to at least one embodiment of the disclosure is a maintenance method for a wind turbine power generation facility that is provided with a wind turbine rotor 4 including at least one wind turbine blade 2, a nacelle 7 that rotatably supports the wind turbine rotor 4, a tower 8 that rotatably supports the nacelle 7, and an electric drive unit 20 that changes a pitch angle of the wind turbine blade 2 or a yaw angle of the nacelle 7, the method including: a step of rotating a wheel gear 24B engaged with a pinion gear 24A of the drive unit 20 by an integer number of times by driving the drive unit 20, the integer being equal to or larger than 1 (step S10).

The number of teeth Nw of the wheel gear 24B is set to be a value indivisible by the number of teeth Np of the pinion gear 24A.

In the method described above, maintenance is performed for the wind turbine 1 with the electric drive unit 20 that changes a pitch angle of the wind turbine blade 2 or the yaw angle of the nacelle 7 driven, and the wheel gear engaged with the pinion gear 24A of the drive unit 20 rotated by an integer number of times equal to or larger than 1. Furthermore, the number of teeth Nw of the wheel gear 24B is set to be a value indivisible by the number of teeth Np of the pinion gear 24A. Thus, engaging area of the wheel gear 24B and the pinion gear 24A can be shifted by the number of teeth that is equal to or larger than 1, compared with before rotation. Specifically, if the number of teeth of the wheel gear 24B that engages with the pinion gear 24A of the drive unit 20 can be divided by the number of teeth of the pinion gear 24A, the engaging area of the wheel gear 24B and the pinion gear 24A cannot be changed even if the wheel gear 24B is rotated. With the method of the disclosure described above, the engaging area can be changed with a simple method. Thus, this simple method can achieve a longer fatigue life of the gear 24 of the drive unit 20 to reduce the need for replacing the entire gear 24.

In some embodiments, the number of teeth Nw and the number of teeth Np may satisfy Nw = Np × M + Nd, where M and Nd are each an arbitrary integer, wherein Nd < Np. (see FIG. 2). With this method, the wheel gear 24B that engages with the pinion gear 24A of the drive unit 20 is rotated by a number of times which is equal to or larger than 1, whereby the engaging area of the wheel gear 24B and the pinion gear 24A can be shifted by Nd which is an integer, compared with before rotation. Thus, this simple method can achieve a longer fatigue life of the gear 24 of the drive unit 20 to reduce the need for replacing the entire gear 24, with Nd set to be an arbitrary integer.

In some embodiments, the integer Nd may satisfy 0.02 ≤ Nd/Nw ≤ 0.04.

With this configuration, the number of teeth Nd shifted by a single rotation corresponds to 8° to 12° of the wheel gear 24B (see, for example, FIG. 3). Thus, for example, by rotating the wheel gear 24B for a single time, an engaging area of teeth 25 that is particularly frequently used in the pitch angle control or the yaw angle control can be completely shifted from the engaging area before the rotation. Thus, all of frequently used teeth 25 of the pinion gear 24A can be shifted with a minimum number of rotations (a single rotation of the wheel gear), whereby the maintenance can be performed with a much shorter period of time.

In some embodiments, the drive unit 20 may include a pitch drive unit 20A that changes the pitch angle, and the wheel gear 24B may be provided to a blade root portion 2A of the wind turbine blade 2. Step S10 may include rotating the wheel gear 24B engaged with the pinion gear 24A of the pitch drive unit 20A.

With this configuration, any one of the advantages of the disclosure described above can be achieved for the engagement between the pinion gear 24A of the pitch drive unit 20A that changes the pitch angle of the wind turbine blade 2 and the wheel gear 24B provided to the blade root portion 2A.

FIG. 6B is a flowchart illustrating a maintenance method for a wind turbine power generation facility according to another embodiment.

As in a nonlimiting example illustrated in FIG. 6B, a maintenance method for the wind turbine 1 according to some embodiments may include a step (step S1) of removing a cable 28 extending from the drive unit 20 toward opposite sides of the wheel gear 24B.

The wind turbine 1 may have wiring for various sensors 26, communication cables 28, and the like arranged on both sides of the wheel gear 24B, between the driven unit and the drive unit 20 that drives the driven unit.

In view of this, in the method described above, the cable 28 extending from the drive unit 20 toward the opposite sides of the wheel gear 24B is removed. Thus, in the maintenance for the wind turbine 1, the cable 28 (such as wiring for various sensors and the communication cable) can be effectively prevented from being twisted, tangled, or broken even if the wheel gear 24B is rotated.

In some embodiments, a surface hardness of the pinion gear 24A may be set to be lower than a surface hardness of the wheel gear 24B.

Generally, the wheel gear 24B that engages with the pinion gear 24A is larger and heavier than the pinion gear 24A, and thus required more cumbersome operations to be replaced compared with the pinion gear 24A.

In view of this, in the method described above, the surface hardness of the pinion gear 24A is set to be lower than the surface hardness of the wheel gear 24B, so that the pinion gear 24A wears faster than the wheel gear 24B. Thus, in many cases, maintenance performed due to wearing of engaging teeth 25 of the wheel gear 24B and the pinion gear 24A can be completed by replacing the pinion gear 24A. Thus, a longer fatigue life of the gear 24 of the drive unit 20 can be achieved with a simple method.

In some embodiments, a surface roughness of the pinion gear 24A may be set to be higher than a surface roughness of the wheel gear 24B.

With this configuration, the surface roughness of the pinion gear 24A is set to be lower than the surface roughness of the wheel gear 24B, so that the pinion gear 24A wears faster than the wheel gear 24B. Thus, in many cases, maintenance performed due to wearing of engaging teeth 25 of the wheel gear 24B and the pinion gear 24A can be completed by replacing the pinion gear 24A. Thus, a longer fatigue life of the gear 24 of the drive unit 20 can be achieved with a simple method.

With at least one embodiment of the disclosure described above, a longer fatigue life of the gear 24 of the drive unit 20 can be achieved with a simple configuration or method.

While some embodiments of the disclosure have been described, it should be noted that the disclosure is not limited to the embodiments described above and also includes embodiments with modifications to the embodiments described above and a combination of these embodiments.

## Claims

1. A maintenance method for a wind turbine power generation facility (1) that is provided with a wind turbine rotor (4) including at least one wind turbine blade (2), a nacelle (7) that rotatably supports the wind turbine rotor (4), a tower (8) that rotatably supports the nacelle (7), and an electric drive unit (20) that changes a pitch angle of the wind turbine blade (2) or a yaw angle of the nacelle (7),
the method comprising a step of rotating a wheel gear (24B) engaged with a pinion gear (24A) of the drive unit (20) by an integer number of times by driving the drive unit (20), the integer being equal to or larger than 1,
wherein the number of teeth Nw of the wheel gear (24B) is set to be a value indivisible by the number of teeth Np of the pinion gear (24A),
**characterized in that**
a) a surface hardness of the pinion gear (24A) is set to be lower than a surface hardness of the wheel gear (24B), and/or
b) a surface roughness of the pinion gear (24A) is set to be higher than a surface roughness of the wheel gear (24B) .

2. The maintenance method according to claim 1, wherein the number of teeth Nw and the number of teeth Np satisfy Nw = Np × M + Nd, where M and Nd are each an arbitrary integer, wherein Nd < Np.

3. The maintenance method according to claim 2, wherein the integer Nd satisfies 0.02 ≤ Nd/Nw ≤ 0.04.

4. The maintenance method according to any one of claims 1 to 3,
wherein the drive unit (20) includes a pitch drive unit that is configured to change the pitch angle,
the wheel gear (24B) is provided to a blade root portion of the wind turbine blade (2), and
the step of rotating includes rotating the wheel gear (24B) engaged with the pinion gear (24A) of the pitch drive unit.

5. The maintenance method according to any one of claims 1 to 4, further comprising a step of removing a cable (28) extending from the drive unit toward opposite sides of the wheel gear (24B).

6. A wind turbine power generation facility (1) comprising:
a wind turbine rotor (4) including at least one wind turbine blade (2);
a nacelle (7) that rotatably supports the wind turbine rotor (4);
a tower (8) that rotatably supports the nacelle (7); and
an electric drive unit (20) that is configured to change a pitch angle of the wind turbine blade (2) or a yaw angle of the nacelle (7), wherein
the drive unit (20) includes:
a motor (21);
a reduction gear (22) which is configured to transmit a driving force from the motor (21); and
a pinion gear (24A) attached to an output shaft (23) of the reduction gear (22), and
the number of teeth Nw of a wheel gear (24B) engaged with the pinion gear (24A) is set to be a value indivisible by the number of teeth Np of the pinion gear (24A),
**characterized in that**
a) a surface hardness of the pinion gear (24A) is set to be lower than a surface hardness of the wheel gear (24B), and/or
b) a surface roughness of the pinion gear (24A) is set to be higher than a surface roughness of the wheel gear (24B).

7. The wind turbine power generation facility (1) according to claim 6, wherein the number of teeth Nw and the number of teeth Np satisfy Nw = Np × M + Nd, where M and Nd are each an arbitrary integer, wherein Nd < Np.

8. The wind turbine power generation facility (1) according to claim 6 or 7,
wherein the drive unit (20) includes a pitch drive unit that is configured to change the pitch angle, and
the wheel gear (24B) is provided to a blade root portion of the wind turbine blade (2).

9. The wind turbine power generation facility (1) according to any one of claims 6 to 8, wherein the pinion gear (24A) is divided into at least two segments and is configured to be detachably attached to the output shaft (23) in a direction perpendicular to an axial direction of the output shaft (23).

10. The wind turbine power generation facility (1) according to any one of claims6 to 9, wherein the pinion gear (24A) is configured to be dividable along an axial direction at a portion where an engaging frequency between the pinion gear (24A) and the wheel gear (24B) is low.

11. The wind turbine power generation facility (1) according to any one of claims6 to 10, wherein the pinion gear (24A) is attached to the output shaft (23) via a key (30) and a key groove (32).

## Patentansprüche

1. Ein Wartungsverfahren für eine Windturbinen-Energieerzeugungsanlage (1), die mit einem Windturbinen-Rotor (4) versehen ist, der mindestens ein Windturbinen-Blatt (2), eine Gondel (7), die den Windturbinen-Rotor (4) drehbar trägt, einen Turm (8), der die Gondel (7) drehbar trägt, und eine elektrische Antriebseinheit (20) aufweist, die einen Anstellwinkel des Windturbinen-Blattes (2) oder einen Gierwinkel der Gondel (7) ändert,
wobei das Verfahren einen Schritt des Drehens eines Radzahnrads (24B), das mit einem Ritzel (24A) der Antriebseinheit (20) in Eingriff steht, um eine ganze Anzahl von Malen durch Antreiben der Antriebseinheit (20) umfasst, wobei die ganze Zahl gleich oder größer als 1 ist,
wobei die Anzahl von Zähnen Nw des Radzahnrads (24B) auf einen Wert eingestellt ist, der durch die Anzahl von Zähnen Np des Ritzels (24A) unteilbar ist,
**dadurch gekennzeichnet, dass**
a) eine Oberflächenhärte des Ritzels (24A) niedriger eingestellt ist als eine Oberflächenhärte des Radzahnrades (24B), und/oder
b) eine Oberflächenrauhigkeit des Ritzels (24A) höher eingestellt ist als eine Oberflächenrauhigkeit des Radzahnrades (24B).

2. Das Wartungsverfahren nach Anspruch 1, wobei die Anzahl von Zähnen Nw und die Anzahl von Zähnen Np Nw = Np x M + Nd erfüllen, wobei M und Nd jeweils eine beliebige ganze Zahl sind, wobei Nd < Np.

3. Das Wartungsverfahren nach Anspruch 2, wobei die ganze Zahl Nd 0,02 ≤ Nd/Nw ≤ 0,04 erfüllt.

4. Das Wartungsverfahren nach einem der Ansprüche 1 bis 3,
wobei die Antriebseinheit (20) eine Anstellantriebseinheit umfasst, die so konfiguriert ist, dass sie den Anstellwinkel ändert,
das Radzahnrad (24B) an einem Blatt-Fußabschnitt des Windturbinen-Blattes (2) vorgesehen ist, und
der Schritt des Drehens das Drehen des Radzahnrads (24B), das mit dem Ritzel (24A) der Anstellantriebseinheit in Eingriff steht, umfasst.

5. Das Wartungsverfahren nach einem der Ansprüche 1 bis 4, das ferner einen Schritt des Entfernens eines Kabels (28) umfasst, das sich von der Antriebseinheit zu gegenüberliegenden Seiten des Radzahnrads (24B) erstreckt.

6. Eine Windturbinen-Energieerzeugungsanlage (1), umfassend:
einen Windturbinen-Rotor (4) mit mindestens einem Windturbinen-Blatt (2),
eine Gondel (7), die den Windturbinen-Rotor (4) drehbar trägt,
einen Turm (8), der die Gondel (7) drehbar trägt, und
eine elektrische Antriebseinheit (20), die so konfiguriert ist, dass sie einen Anstellwinkel des Windturbinen-Blattes (2) oder einen Gierwinkel der Gondel (7) ändert, wobei
die Antriebseinheit (20) umfasst:
einen Motor (21);
ein Untersetzungsgetriebe (22), das so konfiguriert ist, dass es eine Antriebskraft von dem Motor (21) überträgt, und
ein Ritzel (24A), das an einer Abtriebswelle (23) des Untersetzungsgetriebes (22) befestigt ist, und
die Anzahl von Zähnen Nw eines mit dem Ritzel (24A) in Eingriff stehenden Radzahnrades (24B) auf einen durch die Anzahl von Zähnen Np des Ritzels (24A) unteilbaren Wert eingestellt ist,
**dadurch gekennzeichnet, dass**
a) eine Oberflächenhärte des Ritzels (24A) niedriger eingestellt ist als eine Oberflächenhärte des Radrades (24B), und/oder
b) eine Oberflächenrauhigkeit des Ritzels (24A) höher eingestellt ist als eine Oberflächenrauhigkeit des Radzahnrades (24B).

7. Die Windturbinen-Energieerzeugungsanlage (1) nach Anspruch 6, wobei die Anzahl von Zähnen Nw und die Anzahl von Zähnen Np Nw = Np x M + Nd erfüllen, wobei M und Nd jeweils eine beliebige ganze Zahl sind, wobei Nd < Np.

8. Die Windturbinen-Energieerzeugungsanlage (1) nach Anspruch 6 oder 7,
wobei die Antriebseinheit (20) eine Anstellantriebseinheit umfasst, die so konfiguriert ist, dass sie den Anstellwinkel ändert, und
das Radzahnrad (24B) an einem Blatt-Fußabschnitt des Windturbinen-Blattes (2) vorgesehen ist.

9. Die Windturbinen-Energieerzeugungsanlage (1) nach einem der Ansprüche 6 bis 8, wobei das Ritzel (24A) in mindestens zwei Segmente unterteilt ist und so konfiguriert ist, dass es lösbar an der Abtriebswelle (23) in einer Richtung senkrecht zu einer axialen Richtung der Abtriebswelle (23) angebracht werden kann.

10. Die Windturbinen-Energieerzeugungsanlage (1) nach einem der Ansprüche 6 bis 9, wobei das Ritzel (24A) so konfiguriert ist, dass es entlang einer axialen Richtung an einem Abschnitt teilbar ist, an dem eine Eingriffsfrequenz zwischen dem Ritzel (24A) und dem Radzahnrad (24B) niedrig ist.

11. Die Windturbinen-Energieerzeugungsanlage (1) nach einem der Ansprüche 6 bis 10, wobei das Ritzel (24A) über eine Passfeder (30) und eine Passfedernut (32) an der Abtriebswelle (23) befestigt ist.

## Revendications

1. Procédé d'entretien d'un équipement (1) de production d'électricité par turbine éolienne, qui est pourvu d'une roue (4) de turbine éolienne ayant au moins une pale (2) de turbine éolienne, d'une nacelle (7), qui supporte à rotation la roue (4) de turbine éolienne, d'une tour (8), qui supporte à rotation la nacelle (7) et d'une unité (20) d'entraînement électrique, qui change un angle de pas de la pale (2) de turbine éolienne ou un angle de lacet de la nacelle (7),
le procédé comprenant un stade dans lequel on fait tourner un engrenage (24B) de roue, qui engrène avec un engrenage (24A) de pignon de l'unité (20) d'entraînement un nombre entier de fois, en entraînant l'unité (20) d'entraînement, le nombre entier étant supérieur ou égal à 1,
dans lequel le nombre de dents Nw de l'engrenage (24b) de roue est fixé à une valeur indivisible par le nombre de dents Np de l'engrenage (24A) de pignon,
**caractérisé en ce que**
a) une dureté de surface de l'engrenage (24A) de pignon est fixée de manière à être plus petite qu'une dureté de surface de l'engrenage (24B) de roue, et/ou
b) une rugosité de surface de l'engrenage (24A) de pignon est fixée de manière à être plus grande qu'une rugosité de surface de l'engrenage (24B) de roue.

2. Procédé d'entretien suivant la revendication 1, dans lequel le nombre de dents Nw et le nombre de dents Np satisfait Nw = Np x M + Nd, où M et Nd sont chacun un nombre entier arbitraire avec Nd < Np.

3. Procédé d'entretien suivant la revendication 2, dans lequel le nombre entier Nd satisfait 0,02 ≤ Nd/Nw ≤ 0,04.

4. Procédé d'entretien suivant l'une quelconque des revendications 1 à 3,
dans lequel l'unité (20) d'entraînement comprend une unité d'entraînement de pas, qui est configurée pour changer l'angle de pas,
l'engrenage (24B) de roue est prévu à une partie d'emplanture de pale de la pale (2) de turbine éolienne, et
le stade de rotation comprend une rotation de l'engrenage (24B) de roue engrenant avec l'engrenage (24A) de pignon de l'unité d'entraînement de pas.

5. Procédé d'entretien suivant l'une quelconque des revendications 1 à 4, comprenant, en outre, un stade de retrait d'un câble (28) s'étendant de l'unité d'entraînement vers des côtés opposés de l'engrenage (24B) de roue.

6. Equipement (1) de production d'électricité par turbine éolienne, comprenant :
une roue (4) de turbine éolienne ayant au moins une pale (2) de turbine éolienne ;
une nacelle (7), qui supporte à rotation la roue (4) de turbine éolienne ;
une tour (8), qui supporte à rotation la nacelle (7) ; et
une unité (20) d'entraînement électrique, qui est configurée pour changer un angle de pas de la pale (2) de turbine éolienne ou un angle de lacet de la nacelle (7), dans lequel
l'unité (20) d'entraînement a :
un moteur (21) ;
un engrenage (22) de réduction, qui est configuré pour transmettre une force d'entraînement à partir du moteur (21) ; et
un engrenage (24A) de pignon, fixé à un arbre (23) de sortie de l'engrenage (22) de réduction, et
dans lequel le nombre de dents Nw de l'engrenage (24b) de roue est fixé à une valeur indivisible par le nombre de dents Np de l'engrenage (24A) de pignon,
**caractérisé en ce que**
a) une dureté de surface de l'engrenage (24A) de pignon est fixée de manière à être plus petite qu'une dureté de surface de l'engrenage (24B) de roue, et/ou
b) une rugosité de surface de l'engrenage (24A) de pignon est fixée de manière à être plus grande qu'une rugosité de surface de l'engrenage (24B) de roue.

7. Equipement (1) de production d'électricité par turbine éolienne suivant la revendication 6, dans lequel le nombre de dents Nw et le nombre de dents Np satisfait Nw = Np x M + Nd, où M et Nd sont chacun un nombre entier arbitraire avec Nd < Np.

8. Equipement (1) de production d'électricité par turbine éolienne suivant la revendication 6 ou 7,
dans lequel l'unité (20) d'entraînement comprend une unité d'entraînement de pas, qui est configurée pour changer l'angle de pas,
l'engrenage (24B) de roue est prévu à une partie d'emplanture de pale de la pale (2) de turbine éolienne.

9. Equipement (1) de production d'électricité par turbine éolienne suivant l'une quelconque des revendications 6 à 8, dans lequel l'engrenage (24A) de pignon est subdivisé en au moins deux segment et est configuré pour être fixé de manière détachable à l'arbre (23) de sortie dans une direction perpendiculaire à une direction axiale de l'arbre (23) de sortie.

10. Equipement (1) de production d'électricité par turbine éolienne suivant l'une quelconque des revendications 6 à 9, dans lequel l'engrenage (24A) de pignon est configuré pour être divisible suivant une direction axiale à une partie où une fréquence d'engrenage, entre l'engrenage (24A) de pignon et l'engrenage (24B) de roue, est basse.

11. Equipement (1) de production d'électricité par turbine éolienne suivant l'une quelconque des revendications 6 à 10, dans lequel l'engrenage (24A) de pignon est fixé à l'arbre (23) de sortie par une clavette (30) et par une rainure (32) de clavette.
